# EUROPÄISCHE PATENTSCHRIFT

(11) **EP 1 756 440 B1**
(45) Veröffentlichungstag und Bekanntmachung des Hinweises auf die Patenterteilung: **25.01.2012**
(21) Anmeldenummer: 04736737.0
(22) Anmeldetag: 14.06.2004
(51) Int. Cl.: F16D 1/06

(54) **NUTPROFIL FÜR EINE NABEN - WELLENVERBINDUNG**
GROOVED PROFILE FOR A HUB SHAFT CONNECTION
PROFIL CANNELE POUR UNE LIAISON ARBRE-MOYEU

(43) Veröffentlichungstag der Anmeldung: 28.02.2007
(73) Patentinhaber: ERNST GROB AG, CH-8708 Männedorf (CH)
(72) Erfinder: DERIAZ, Daniel, CH- 8706 Meilen (CH)
(74) Vertreter: Frei Patent Attorneys
(86) Internationale Anmeldenummer: PCT/CH2004/000357
(87) Internationale Veröffentlichungsnummer: WO 2005/121581

(56) Entgegenhaltungen:
- WO-A-96/05101
- DE-C- 3 635 916
- US-A- 5 243 874
- US-A- 5 720 102
- US-A- 5 779 551

## Beschreibung

Die vorliegende Erfindung betrifft eine Naben-Wellen-Verbindung nach dem Oberbegriff von Anspruch 1, ein Teleskoprohr nach dem Oberbegriff von Anspruch 7 sowie ein Verfahren zur Herstellung der Naben-Wellen-Verbindung nach dem Oberbegriff von Anspruch 9.

Für die formschlüssige Verbindung einer Nabe mit einer Welle werden häufig Pass- oder Gleitfederverbindungen eingesetzt. Wenn grosse Drehmomente zu übertragen sind und eine axiale Verschiebung zwischen Nabe und Welle gewährleistet werden soll, wie beispielsweise bei Gelenkwellen, wird häufig ein Vielnut-Profil resp. eine Vielkeilwelle eingesetzt.

Die Nuten weisen dabei häufig entweder ein Rechteck- oder ein Trapezförmiges Profil auf. Die Profile werden dabei entweder in spanender Bearbeitung oder durch Kaltumformung hergestellt, wie beispielsweise durch Schlagwalzverfahren. Gegenüber der spanenden Bearbeitung hat das Kaltumformen vor allem den Vorteil der grösseren Wirtschaftlichkeit bei hohen zu produzierenden Stückzahlen.

Derartige Profile werden beispielsweise bei Kupplungslamellenträgern für automatische Fahrzeuggetriebe oder bei Gelenkwellen-Teleskoprohren eingesetzt, welche beispielsweise im Fahrzeugbau in grossen Stückzahlen verwendet werden. Dabei werden jeweils ein Innen- und ein Aussenrohr mit entsprechender Profilierung auf der Innenresp. Aussenseite verwendet. Aufgrund der hohen Stückzahlen ist für eine wirtschaftliche Produktion das Kaltumformverfahren von grossem Interesse, aber bedingt durch die hohe Rotationsgeschwindigkeit und Belastung von Gelenkwellen-Teleskoprohren im Betrieb werden sehr hohe Anforderungen an die Genauigkeit der Profilverbindung zwischen Innen- und Aussenrohr gestellt.

So muss nicht nur eine möglichst grossflächige Verbindung zwischen den beiden Profilen der Rohre für die Übertragung von hohen Drehmomenten geschaffen werden sondern für die Erreichung von hohen Rotationsgeschwindigkeiten muss auch eine sehr gute Zentrierung der beiden Rohre gewährleistet werden.

US5243874 offenbart eine formschlüssige Naben-Wellen-Verbindung mit einem Nut profil.

Die Aufgabe der vorliegenden Erfindung bestand darin, ein Verzahnungsprofil für Antriebskomponenten, insbesondere für gegeneinander verschiebbar ausgebildete Teleskoprohre, zu finden, welches im Betrieb eine möglichst optimale Kraftübertragung mit ruhigem Laufverhalten gewährleistet.

Diese Aufgabe wird erfindungsgemäss durch ein Verzahnungsprofil mit den Merkmalen nach Anspruch 1 gelöst. Weitere, erfindungsgemäss bevorzugte Ausführungen ergeben sich aus den Merkmalen der weiteren Ansprüche 2 bis 6.

Bei einer mit einem Nutprafil formschlüssigen Naben-Wellen-Verbindung mit im Wesentlichen trapezförmigen Querschnitten der Verzahnungsprofile sowohl der Nabe wie auch der Welle, wobei die Wandstärke zumindest im Bereich der Verzahnungsprofile kleiner ist als die Differenz zwischen Kopfkreisdurchmesser und Fusskreisdurchmesser des Verzahnungsprofils, ist jeweils mindestens eine der beiden einander zugewandten Flanken der Profile von Nabe und Welle im Querschnitt gewölbt resp. bogenförmig ausgebildet. Ausserdem besteht zwischen einander Zugewandten Flanken von Welle und Nabe ein sich entlay der Flanke verärderndes Spiel.

Durch diese erfindungsgemässe Ausgestaltung der Flanken ergibt sich im Betrieb unter Last ein kontinuierliches Anschmiegen der Flanken aneinander. Von einer im Querschnitt eher geringfügigen Berührungslänge der Flanken wird mit zunehmender Belastung, hervorgerufen durch das zu übertragende Drehmoment, eine im Querschnitt sich über einen erheblichen Teil der Profilhöhe erstreckende Berührungslänge infolge von elastischer Verformung der sich berührenden Flanken gebildet. Damit erfolgt vorteilhaft unter Berücksichtigung der axialen Ausdehnung des Verzahnungsprofils eine grossflächige, gut zentrierende Verbindung und damit wird eine Erhöhung der Belastbarkeit und Laufruhe erreicht.

Vorzugsweise sind die Wölbungen beider Flanken im Querschnitt gewölbt resp. bogenförmig in derselben Richtung ausgebildet.

Vorzugsweise sind die Wölbungen der inneren Flanken der Nabe konkav und die Wölbungen der äusseren Flanken der Welle konvex ausgebildet.

Durch die gewölbte Flankenkontur ergibt sich einerseits wie bereits dargestellt ein Anschmiegen der Flanken unter Belastung und damit eine flächige Verteilung der Belastung und andererseits wird damit vorteilhaft eine sehr gute Zentrierwirkung und Laufruhe erreicht.

Vorzugsweise weisen die Wölbungen im Querschnitt eine Kreisform auf und erstrecken sich vorzugsweise mindestens über 50% bis 75% der jeweiligen Profilhöhe. Damit wird auch bei grossen Belastungen, beispielsweise bei der Übertragung von hohen Drehmomenten und/oder hohen Rotationsgeschwindigkeiten der Naben - Wellenverbindung, eine im Betrieb flächige Verbindung zwischen den Profilquerschnitten resp. den einander zugewandten Flanken von Welle resp. Nabe erreicht.

Beispielsweise sind dabei die Zentren der Kreisform der Wölbungen von einander zugewandten Flanken im selben Punkt liegend oder radial voneinander beabstandet angeordnet oder beliebig versetzt zueinander beabstandet angeordnet. Bei konzentrischer Anordnung der Kreismittelpunkte wird ein im Ruhezustand annähernd konstantes Spiel, d.h. konstanter Abstand, zwischen zwei einander zugewandten Flächen der Profilquerschnitte erreicht. So wird allerdings kein sich entlany der Flanke veränderndes Spiel erreicht. Wenn die Zentren entlang einer gemeinsamen Radiuslinie der beiden Kreisformen voneinander beabstandet angeordnet sind, so wird ein im Bereich der mittleren Profilhöhe minimales Spiel und ein an den beiden Enden der Profilhöhe maximales Spiel erreicht. Damit wird in der Regel im Betrieb die flächige Berührung der beiden Flanken ebenfalls auf mittlerer Profilhöhe erfolgen, wobei sich bei steigender Belastung die Berührungsfläche annähernd gleichmässig nach Innen und Aussen vergrössert. Bei voneinander beliebig im Abstand angeordneten Zentren wird das minimale Spiel entweder nach Aussen oder nach Innen in Bezug auf die Mittelachse von Welle resp. Nabe verschoben angeordnet und entsprechend an dieser Stelle im Betrieb der Berührungspunkt resp. die Berührungsfläche gebildet werden. Entsprechend den Anforderungen an die Gelenkwelle kann eine weiter nach Innen oder weiter nach Aussen liegende Berührung von Vorteil sein und durch die entsprechende Wahl der Geometrie der Wölbung gesteuert resp. eingestellt werden.

Vorzugsweise besteht zwischen einander zugewandten Flanken von Welle und Nabe ein sich entlang der Flanke veränderndes Spiel, vorzugsweise von minimal 0,02 mm und maximal 0,1 mm. Mit diesen Werten ergibt sich eine optimale Verzahnung von Welle und Nabe für eine Teleskopwelle, wobei im Betrieb unter Last immer die Flanken von allen Profilen am Umfang miteinander in Kontakt stehen.

Die Aufgabe wird weiter durch ein Teleskoprohr für Gelenkwellen mit einem Innenrohr und einem Aussenrohr gelöst, bei welchem das Innenrohr oder das Aussenrohr ein Nutprofil nach einem der Ansprüche 1 bis 6 aufweisen.

Vorzugsweise sind dabei das Innerohr und das Aussenrohr als Hohlkörper mit annähernd gleichmässiger Wanddicke ausgebildet. Derartige Gelenkwellen eignen sich besonders gut für den Einsatz in Kraftfahrzeugen zur Kraftübertragung vom Getriebe auf die Antriebsachsen resp. -räder.

Weiter wird erfindungsgemäss ein Verfahren zur Herstellung eines Nutprofils nach einem der Ansprüche 1 bis 6 im Kaltwalzverfahren vorgeschlagen, bei welchem eine oder mehrere Profilrollen oder Profilwalzen mit einem entsprechend dem Nutprofil ausgebildeten Profilquerschnitt in Eingriff mit der Oberfläche der Nabe resp. Welle gebracht werden. Damit kann vorteilhaft das Profil in einem Arbeitsgang hergestellt werden.

Vorzugsweise werden die Profilrollen resp. Profilwalzen in periodisch, schlagenden Eingriff gebracht. Durch dieses Schlagwalzverfahren können besonders präzise Profilierungen in dünnwandigen Rohren erzeugt werden.

Ein Ausführungsbeispiel der vorliegenden Erfindung wird nachstehend anhand von Zeichnungen noch näher erläutert. Es zeigen
Fig. 1 den Querschnitt durch ein Teleskoprohr mit Nabe und Welle im verzahnten Abschnitt;
Fig. 2 den Querschnitt durch einen Ausschnitt des Teleskoprohrs mit Nabe und Welle mit erfindungsgemässem Nutprofil;
Fig. 3 den Querschnitt durch ein Ausschnitt eines weiteren Teleskoprohres mit Nabe und Welle mit einem alternativen erfindungsgemässen Nutprofil; und

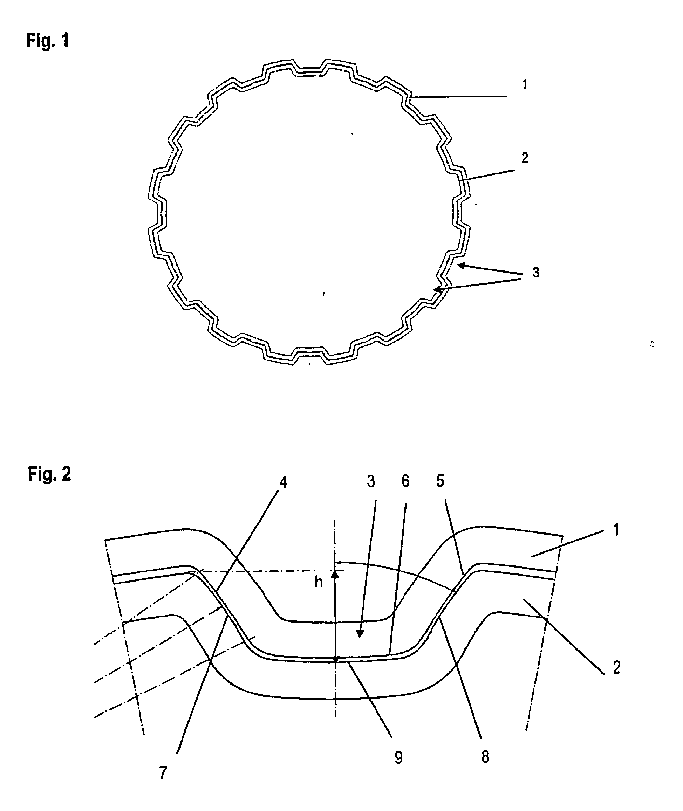

In Figur 1 ist der Querschnitt durch die als Hohlprofil ausgebildete Nabe resp. Aussenrohr 1 und Welle resp. Innenrohr 2 eines Teleskoprohres dargestellt, wie es beispielsweise im Fahrzeugbau Verwendung findet. Dabei weist sowohl das Aussenrohr 1 wie auch das Innenrohr 2 eine gleichmässig entlang des Umfanges angeordnete Profilierung mit im Wesentlichen trapezförmige Querschnitte aufweisenden Nuten 3 auf.

In Figur 2 ist detaillierter der Ausschnitt eines einzelnen, erfindungsgemäss ausgebildeten Nutprofils des Teleskoprohres nach Figur 1 dargestellt. Das Aussenrohr 1

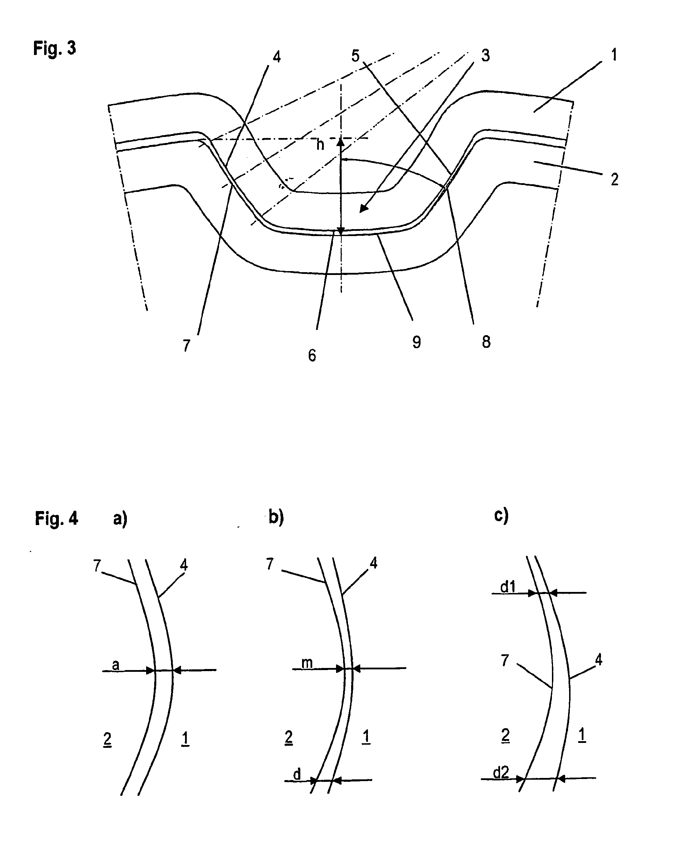

Fig. 4 a) schematisch den Verlauf von einander gegenüberliegenden Wölbungen von Nutprofilen mit annähernd konstantem Abstand.
Fig. 4 b) und c) schematisch den Verlauf von einander gegenüberliegenden Wölbungen von Nutprofilen nach Figur 2 in zwei unterschiedlichen Varianten.
weist dabei eine im Wesentlichen einen trapezförmigen Querschnitt aufweisende Nut 3 mit zur Innenseite konkav gewölbten Flanken 4 resp. 5 auf. Der Nutkopf 6 weist vorteilhaft eine zur Innenseite des Profils konvexe Wölbung auf.

Das Innenrohr 2 weist eine einen entsprechend ausgebildeten Querschnitt aufweisende Nut 3 mit zur Aussenseite konvex gewölbter Flanke 7 resp. 8 auf. Der Nutboden 9 ist vorteilhaft konkav gewölbt ausgebildet.

Durch diese Geometrie weisen die Nuten 3 von Innenrohr 1 und Aussenrohr 2 einen Spalt zwischen ihren.Flanken auf. Durch die gleichgerichtete Wölbung der Flankenflächen 4 und 7 resp. 5 und 8 der Nuten von Innenrohr 1 und Aussenrohr 2 werden sich jeweils benachbarte Nutenflächen in Querschnitt zuerst nahezu punktförmig berühren, wobei sich bei zunehmender Belastung resp. zunehmender Rotationsgeschwindigkeit durch Erhöhung der an dieser Stelle übertragenen Kraft eine kleine elastische Verformung der entsprechenden Flankenflächen einstellt. Diese elastische Verformung führt dazu, dass sich die Berührung der beiden Flankenflächen 5 und 8 bzw. 4 und 7 im Querschnitt linienförmig ausdehnt. Damit wird die Steigerung der zunehmenden Flächenpressung vermindert und die zulässige Flächenbelastung auch bei grossen Rotationsdrehzahlen und hohen Kräften bei grossen zu übertragenden Drehmomenten nicht überschritten. Als weiterer Vorteil wird eine flächige, gut zentrierende Berührung zwischen Innenrohr 1 und Aussenrohr 2 unter Last erzielt.

Derselbe Effekt kann natürlich auch erzielt werden, wenn die Wölbungen der Flankenflächen 4, 5 resp. 7, 8 umgekehrt angeordnet sind, wie dies in Figur 3 dargestellt ist.

Alternativ kann aber auch nur eine der Flankenflächen eine Wölbung aufweisen, während die andere Flankenfläche eine geradlinige Kontur aufweist. Dies kann gerade bei dickwandigen Rohren oder Wellen bzw. Wellen aus Vollmaterial von Vorteil sein.

In den Figuren 4 a) bis c) werden alternative Wölbungen von einander zugewandten Flankenflächen 4 und 7 schematisch dargestellt.

In Figur 4 a), welche nicht dem gegenstand des Anspruchs 1 entspricht, sind die Flanken 4 und 7 zweier einander zugewandter Flankenflächen mit annähernd konstantem Abstand a dargestellt. Dies kann bei einer kreisförmigen Wölbung der Flanken 4 resp. 7 dadurch erreicht werden, dass die Zentren der beiden Wölbungskreise im selben Punkt liegen.

In Figur 4 b) weisen die Flanken 4 und 7 etwa auf halber Höhe einen geringsten Abstand m auf, während sie jeweils am unteren resp. oberen Rand einen grösseren Abstand d aufweisen. Dies wird durch eine Versetzung der Zentren der Wölbungskreise entlang der Wölbungsmittelinie in Bezug auf die Flanken 4 und 7 erreicht, wobei hier der Flankenkreis der Flanke 7 den kleineren Durchmesser aufweist als der Flankenkreis der Flanke 4.

In Figur 4 c) ist schliesslich noch eine Flankenpaarung 4 und 7 mit in Bezug auf die Wölbungsmittellinie versetzt angeordneten Zentren der Flankenkreise dargestellt. Dies führt dazu, dass beispielsweise im Bereich des oberen Randes der geringste Abstand d1 und im Bereich des unteren Randes der grösste Abstand d2 erzielt wird.

Es hat sich gezeigt, dass sich das erfindungsgemässe Nutprofil für Wellen resp. Naben mit einem Durchmesser von 20mm bis zu 200mm und einer Nutenzahl zwischen 2 bis 60 Nuten resp. Zähnen besonders gut eignen. Dabei weisen die Nuten eine Höhe zwischen 1mm bis 10mm auf. Die Wölbung wird dabei derart gewählt, dass ein mittleres Flankenspiel a im Ruhezustand zwischen den Nuten der Welle und der Nabe zwischen 0,02mm und 0,10mm erreicht wird. Der Radius der Wölbung bei kreisförmiger Wölbung wird vorteilhaft zwischen dem 1- bis 40-fachen der Nutenhöhe gewählt. Bei voneinander beabstandeten Zentren der Wölbungskreise ist das Zentrum des grösseren Wölbungskreises vorteilhaft zwischen 1/4 bis zum Doppelten des Radius des kleineren Wölbungskreises versetzt angeordnet.

## Patentansprüche

1. Formschlüssige Naben-Wellen-Verbindung mit einem Notprofil mit im Wesentlichen trapezförmigen Querschnitten (3) der Verzahnungsprofile sowohl der Nabe (1) wie auch der Welle (2), wobei die Wandstärke sowohl der Nabe (1) wie auch der Welle (2) zumindest im Bereich der Verzahnungsprofile kleiner ist als die Differenz zwischen Kopfkreisdurchmesser und Fusskreisdurchmesser des jeweiligen Verzahnungsprofils, **dadurch gekennzeichnet, dass** jeweils mindestens eine der beiden einander zugewandten Flanken (4,6; 5,7) der Profile von Nabe (1) und Welle (2) im Querschnitt gewölbt resp. bogenförmig ausgebildet ist, und dass zwischen einander zugewandten Flanken von Welle (2) und Nabe (1) ein sich entlang der Flanke veränderndes Spiel besteht.

2. Formschlïssige Naben-Wellen-Verbindung nach Anspruch 1, **dadurch gekennzeichnet, dass** die Wölbungen beider Flanken (4,6; 5,7) im Querschnitt gewölbt resp. bogenförmig in derselben Richtung ausgebildet sind.

3. Formschlüssige Naben-Wellen-Verbindung nach Anspruch 2, **dadurch gekennzeichnet, dass** die Wölbungen der inneren Flanken (4,5) der Nabe (1) konkav und die Wölbungen der äusseren Flanken (7,8) der Welle (2) konvex ausgebildet sind.

4. Formschlüssige Naben-Wellen-Verbindung nach einem der Ansprüche 1 bis 3, **dadurch gekennzeichnet, dass** die Wölbungen im Querschnitt eine Kreisform aufweisen und sich vorzugsweise über mindestens 50% - 75% der jeweiligen Profilhöhe (h) erstrecken.

5. Formschlüssige Naben-Wellen-Verbindung nach Anspruch 4, **dadurch gekennzeichnet, dass** das Zentrum der Kreisform der Wölbung von einander zugewandten Flanken im selben Punkt liegen oder radial voneinander beabstandet angeordnet sind oder beliebig versetzt zueinander beabstandet angeordnet sind.

6. Formschlüssige Naben-Wellen-Verbindung nach einem der Ansprüche 1 bis 5, **dadurch gekennzeichnet, dass** das sich entlang der Flanke verändernde Spiel minimal 0,02 mm und maximal 0,10 mm beträgt.

7. Teleskoprohr für Gelenkwellen mit einem Innerohr (2) und einem Aussenrohr (1), wobei durch das Innenrohr (2) und das Aussenrohr (1) eine Formschlüssige Naben-Wellen-Verbindung nach nach einem der Ansprüche 1 bis 6 gebildet wird.

8. Teleskoprohr nach Anspruch 7, **dadurch gekennzeichnet, dass** das Innerohr (2) und das Aussenrohr (1) als Hohlkörper mit annähernd gleichmässiger Wandstärke ausgebildet sind.

9. Verfahren zur Herstellung einer Formschlüssige Naben-Wellen-Verbindung nach einem der Ansprüche 1 bis 6, wobei die Profile von Nabe (1) und/oder welle (2) im Kaltwalzversfahren hergestellt werden, **dadurch gekennzeichnet, dass** dazu eine oder mehrere Profilrollen oder Profilwalzen mit einer entsprechend der Formschlüssige Naben-Wellen-Verbindung ausgebildetem Profilquerschnitt in Eingriff mit der Oberfläche der Nabe (1) resp. Welle (2) gebracht werden.

10. Verfahren nach Anspruch 9, **dadurch gekennzeichnet, dass** die Profilrollen resp. Profilwalzen in periodisch, schlagenden Eingriff gebracht werden.

## Claims

1. A form fitting hub-shaft connection with a groove profile with essentially trapezoid cross-sections (3) of the toothing profiles of both, the hub and the shaft, wherein the wall thickness of both, the hub and the shaft, is at least in the region of the toothing profiles less than the difference between tip and root circle diameters of the respective toothing profile, **characterised in that** in each case at least one of the flanks (4, 6; 5, 7) of the profiles of hub (1) and shaft (2) facing each other is in cross section of a curved or arc-shaped design and that there is a play varying along the flank between the flanks of the profiles of hub (1) and shaft (2) facing each other.

2. Form fitting hub-shaft connection according to claim 1, **characterised in that** the curvatures of both flanks (4, 6; 5, 7) is in cross section designed as curved or arc-shaped in the same direction.

3. Form fitting hub-shaft connection according to claim 2, **characterised in that** the curvatures of the inner flanks (4, 5) of the hub (1) are concave and the curvatures of the outer flanks (7, 8) of the shaft (2) are convex.

4. Form fitting hub-shaft connection according to one of claims 1 to 3, **characterised in that** the curvatures show a circular shape in cross section and preferably extend over at least 50% to 75% of the respective profile height.

5. Form fitting hub-shaft connection according to claim 4, **characterised in that** the center of the circular shape of the curvature of mutually facing flanks lie in the same point, or are positioned radially spaced apart, or are positioned arbitrarily offset and spaced from one another.

6. Form fitting hub-shaft connection according to one of claims 1 to 5, **characterised in that** the variable play along the flank measures a minimum of 0.02 mm and a maximum of 0.10 mm.

7. A telescopic pipe for drive shafts with an inner pipe (2) and an outer pipe (1), wherein the inner pipe (2) or the outer pipe (1) form a form fitting hub-shaft connection according to one of claims 1 to 6.

8. Telescopic pipe according to claim 7, **characterised in that** the the inner pipe (2) or the outer pipe (1) are designed as hollow bodies with approximately uniform wall thickness.

9. A method for the manufacture of a form fitting hub-shaft connection according to one of claims 1 to 6,wherein the profiles of hub (1) and/or shaft (2) are manufactured in a cold forming process, **characterised in that** therefor one or more profile rolls or profile rollers having a profile cross section designed according to the groove profile are engaged with the surface of the hub (1) and shaft (2), respectively.

10. Method according to claim 9, **characterised in that** the profile rolls or profile rollers are engaged in a periodic impacting manner.

## Revendications

1. Liaison arbre/moyeu par coopération de formes comprenant un profil cannelé avec des sections transversales essentiellement en forme de trapèze (3) des profilés à denture aussi bien du moyeu (1) que de l'arbre (2), dans lequel l'épaisseur de paroi aussi bien du moyeu (1) que de l'arbre (2) est plus petite au moins dans la zone des profilés à denture que la différence entre le diamètre circulaire de tête et le diamètre circulaire d'embase du profilé respectif à denture, **caractérisé en ce que**, respectivement au moins un des deux flancs tournés (4, 6; 5, 7) l'un vers l'autre des profilés du moyeu (1) et de l'arbre (2) est, dans la section transversale, courbé ou réalisé en forme d'arc et **en ce que**, entre les flancs tournés l'un vers l'autre de l'arbre (2) et du moyeu (1), il existe un jeu qui se modifie le long des flancs.

2. Liaison arbre/moyeu par coopération de formes selon la revendication 1, **caractérisée en ce que** les courbures des deux flancs (4, 6 ; 5, 7) sont, dans la section transversale,courbées ou arquées dans la même direction.

3. Liaison arbre/moyeu par coopération de formes selon la revendication 2, **caractérisée en ce que** les courbures des flancs intérieurs (4, 5) du moyeu (1) sont réalisées de manière concave et les courbures des flancs extérieurs (7, 8) de l'arbre (2) sont réalisées de manière convexe.

4. Liaison arbre/moyeu par coopération de formes selon l'une des revendications 1 à 3, **caractérisée en ce que** les courbures présentent une forme circulaire dans la section transversale et s'étendent de préférence sur au 50% à 75% de la hauteur respective de profilé (h).

5. Liaison arbre/moyeu par coopération de formes selon la revendication 4, **caractérisée en ce que** les centres de la forme circulaire de la courbure des flancs tournés l'un vers l'autre se trouvent dans le même point ou sont agencés à distance radiale les uns des autres ou sont agencés à distance de manière quelconque avec un retrait les uns par rapport aux autres.

6. Liaison arbre/moyeu par coopération de formes selon l'une des revendications 1 à 5, **caractérisée en ce que** le jeu qui se modifie le long du flanc se monte au minimum à 0,2 mm et au maximum à 0,10 mm.

7. Tube télescopique pour des arbres articulés ou pour les arbres de transmission comportant un tube intérieur (2) et un tube extérieur (1), dans lequel une liaison arbre/moyeu par coopération de formes selon l'une des revendications 1 à 6 est fournie par le tube intérieur (2) et le tube extérieur (1).

8. Tube télescopique selon la revendication 7, **caractérisé en ce que** le tube intérieur (2) et le tube extérieur (1) sont réalisés comme corps creux avec une épaisseur de paroi approximativement régulière.

9. Procédé pour fabriquer une liaison arbre/moyeu par coopération de formes selon l'une des revendications 1 à 6, dans lequel les profilés du moyeu (1) et/ou de l'arbre (2) sont fabriqués au cours d'un procédé de laminage à froid, **caractérisé en ce que**, pour cela, un ou plusieurs rouleaux de profilé ou un ou plusieurs cylindres de profilé avec une section de profilé qui est réalisée en correspondance avec le profilé cannelé (3) sont amenés en engagement avec la surface du moyeu (1) ou de l'arbre (2).

10. Procédé selon la revendication 9, **caractérisé en ce que** les rouleaux de profilé ou les cylindres de profilé sont amenés périodiquement en engagement de frappement.
